# EUROPEAN PATENT SPECIFICATION

(11) **EP 0 834 292 B1**
(45) Date of publication and mention of the grant of the patent: **28.08.2002**
(21) Application number: 97850132.8
(22) Date of filing: 18.09.1997
(51) Int. Cl.: A61C 8/00, A61C 19/04

(54) **Device for producing drill holes in jaw bone**
Vorrichtung zum Herstellen von Bohrlöchern in Kieferknochen
Dispositf pour la production de trous de forage dans l'os maxillaire

(30) Priority: 25.09.1996 SE 9603498
(43) Date of publication of application: 08.04.1998
(73) Proprietor: Nobel Biocare AB (publ), 402 26 Göteborg (SE)
(72) Inventor: Carlsson, Lennart, 431 38 Mölndal (SE)
(74) Representative: Olsson, Gunnar

(56) References cited:
- WO-A-94/26200
- WO-A-95/15731

## Description

### TECHNICAL FIELD

The invention relates to a device for establishing, for example in real time, drill holes for implants in the jaw bone where there are predetermined requirements in respect of the mutual parallelism between the longitudinal axes of the drill holes (of the implants) and their inclinations with respect to an occlusion plane.

### PRIOR ART

It is already known per se to utilize various types of hand tools whose spatial position is monitored. The monitoring can be effected in a manner known per se and using means which are known per se.

As an example of this technique it is referred to WO-A-94 26200 which relates to an adjustable guiding device for positioning dental implants and which comprises a tubular guide made from a radio-opaque material and which has a diameter required to guide a drill for implant cavities. The use of computer stations in various dental contexts is also already known. Thus, for example, it has been proposed to plan drill holes and surgical interventions in conjunction with three-dimensional presentation on a computer screen. Such systems can be coupled to some form of support system for surgery.

In this context it is referred to WO-A-95 15731 which relates to an arrangement for collecting manufacturing data for production of artificial support members or replacement parts, such as dental bridges, dental caps or the like, in which a camera is used for stereophotography.

It is also known, in connection with implants, that it is of great importance to be aware of the directions of the implants/drill holes with respect to the occlusion surfaces and the mutual parallelism between the longitudinal axes of the implants. In this connection, mechanical auxiliary instruments are used in the surgical work, so-called templates, pins, etc., for example the direction sensors sold by Nobel Biocare.

### DESCRIPTION OF THE INVENTION

### TECHNICAL PROBLEM

There is a need for easy-to-use support systems for planning and carrying out surgical interventions for establishing implants in a jaw bone. It is thus essential to be able to use components which are available on the market and which have been tried and tested in practice, and whose handling and use are well known within the dental sector. The invention aims to solve this problem among others.

It is important to be able to carry out the implant work in a clear-cut way. It is therefore not acceptable to produce drill holes which should really have had different positions and inclinations on account of the condition or appearance of the jawbone. This detracts from the quality of, and can in some cases completely jeopardize, the entire implant work and can be greatly to the detriment of the patient. The invention solves this problem too.

It is therefore essential to ensure that deviations in the extents and inclinations of the longitudinal axes are not allowed to assume inadmissible values for any (one or more) of the drill holes lying in the row of drill holes. It is important to be able to obtain a clear and easily comprehensible indication of this condition so that it is possible to rectify the mistake even in the initial stages of the drill hole production work and to guarantee that the parallelism and inclinations can be maintained within predetermined limit values. It is also important to be able to take into account the circumstances (appearance, condition, etc.) of the corresponding jaw. Among other things, it is often of crucial importance to be able to determine one or more points of contact for the longitudinal axis of the implant in the other jaw. The invention solves this problem too.

### SOLUTION

The novel device is characterized in that adjustments in the actual system of coordinates are carried out or simulated by means of a hand tool. The simulated adjustments are transmitted to a computer on whose screen it is possible to obtain an indication of whether the simulation performed is acceptable or not. If it is not acceptable, complete or partial simulation of the hand tool adjustments, etc., is carried out anew. If the adjustments are accepted, information is sent from the computer to the hand tool which can in this way be aligned with the jaw as a function of control signal information.

Specifically all the drill holes are simulated by the hand tool in terms of their positions and inclinations, and signals relating to the simulation are transmitted to the computer, in that the computer relates, for example compares, checks, etc., the positions and inclinations of the simulated drill holes both in relation to one another and with respect to one or more of the parameters initially mentioned, in that, if the relation is accepted by the computer, simulated positional and directional information are transmitted from the computer to the tool which, with the aid of the transmitted information (the control information), is applied against the jaw bone for the said hole production.

The production of the drill hole with the aid of the said control information can in this case take place in any desired sequence or, for example, in the sequence in which the simulation is performed.

Information relating to longitudinal axes of the drill holes, or of the implants applied in these, which are ideal for the surgical intervention in question, is input to the computer station. Data relating to other parameters, for example jaw angle during actual reading-off, positions and status of opposite jaw, etc., is also input to the computer. The tool is applied to the respective imagined drill hole in the jaw bone (for example the first drill hole) with an alignment to or on the dentine which corresponds to the longitudinal axis of the future drill hole (implant). With the aid of the contents of the initially mentioned signals, the computer station simulates the longitudinal axes of the imagined drill holes (implants). The computer station compares the longitudinal axes, thus simulated using the signal contents, with the said ideal extents which take account of the parameters in question, for example mutual parallelism, inclinations to the occlusion plane, etc. The drill hole production is thereafter carried out either directly, if predetermined permissible differences between the ideal and the simulated longitudinal axes are not exceeded, or after any differences between the ideal and the simulated longitudinal axes which exceed the predetermined permissible differences have been eliminated by changing the alignment of the tool.

The computer station can operate on the one hand with a first presentation function of all or parts of the dentine and an ideal or optimum positioning of the drill holes in the dentine, the imagined continuations of the drill holes and/or the implants, and on the other hand a second presentation function for the drill holes simulated with the tool. The first and second presentations can be superposed on each other in this case. In addition, information on further parameters can be input and utilized, for example occlusion plane, points and positions in opposite jaw, contact points in teeth or implants of opposite jaw, relevant jaw angle(s), etc. The information on differences can in this way be effected using a comparison function in the computer station. The information on differences can be effected graphically and/or acoustically and/or optically. The tool whose spatial position is monitored can be supplied with control signal information in the form of one or more signals emanating from the computer station. The connection between the computer station and the tool can in this case be wired and/or wireless. Thus, for example, infrared radiation can be used.

In a preferred embodiment, the graphic representation of the jaw bone(s) is reproduced in end view(s). The jaw bone(s) can in this case be extended in a straight plane (or straight planes). In this representation, the said parallelism and inclinations are effectively reproduced. In addition, the simulated actual representation can be superposed on the graphic desired representation. In this way, for example, the effect of the longitudinal axis simulated by the tool on the longitudinal axes of the respective drill hole can be indicated or extracted from the signals.

A device according to the invention can be regarded as being principally characterized by the fact that a hand tool whose spatial position is monitored is designed to generate a simulated longitudinal axis for each drill hole in the jaw bone by application of the tool against or on the jaw bone at the imagined position of the drill hole. One or more detection members are in this case arranged to detect the respective actual position of the hand tool and to generate a position signal or position signals as a function of the detection. As a function of the said position signal or position signals which may thus correspond to a longitudinal axis for each second drill hole, equip-ment, which consists of a computer station, is arranged to generate simulation of all or parts of the jaw bone and of the longitudinal extents of the drill holes, in the said jaw bone, on the basis of the simulated longitudinal axis of the respective drill hole and the initially mentioned predetermined requirements in respect of the mutual parallelism and inclinations to the occlusion plane. If the simulated hole is acceptable, the station can be arranged to send control signals to the tool for producing the actual drill holes.

In one embodiment, the tool is used to indicate the position on the bite plane by recording the point on the teeth/the jaw bone in the opposite jaw. In this embodiment, the recording can be done in an imagined occlusion position. In this way, the point of contact of the centre line through the implant can be assessed with respect to the angle of loading upon mastication.

### ADVANTAGES

By means of what has been proposed, above, a simple support function for implant work in jaw bone is obtained. The condition or appearance of the jaw bone or errors made initially, need not risk the total implant work. Contact points on the teeth, implants, jaw bone, etc., of the opposite jaw can also be assessed with respect to mastication. By graphic reproduction of each jaw bone extended in a straight plane, parallelism and inclinations can easily be read off and assessed. Possible information on deviations can easily be fed back to the surgeon who can obtain information on inadmissible deviation from the computer screen and/or optic and/or acoustic information in the hand tool. The connection between the computer and the hand tool and between the hand tool and the detection member/detection members can be wired or wireless via radio channel(s), infrared radiation, etc. The simulation with the tool takes place in the actual system of coordinates (in which the patient is located). The computer can operate with its own system of coordinates and feed the control signal information back into the said actual system of coordinates. The drill hole constellation simulated on the computer with the tool can be assessed by the surgeon who, using his professional experience, assesses the feasibility of the constellation. If accepted, production members can be activated. Upon this activation, the computer is locked and the computer can send the control information in question, in the -locked status, to the tool.

### DESCRIPTION OF THE FIGURES

A presently proposed embodiment of a device according to the invention will be described hereinbelow with reference being made at the same time to the attached drawings, in which:
Figure 1 shows, in a perspective view, parts of a jaw and its jaw bone, and a hand tool is applied against the jaw bone for simulating a longitudinal axis direction for imagined drill hole production in the jaw bone,
Figure 2 shows, principally, the spatial position of the hand tool according to Figure 1, and its connection to a computer station,
Figure 2a shows a Cartesian coordinates system in which the spatial position of the hand tool according to Figure 1 is entered,
Figure 3 shows a diagram of a computer station whose screen shows in graph form the parallelism and inclinations for simulated or ideal drill hole productions carried out in a jaw bone according to Figure 1,
Figure 3a shows, principally, the maxilla and mandible of the upper and lower jaws of a human,
Figure 4 shows, in a horizontal view, an ideal curve for implant positioning in drill holes produced in a jaw bone,
Figure 5 shows, in an overview, the arrangement including tool, video cameras, computer station etc. near or on a patient,
Figure 6 shows, in a side view, a human jaw with the jaw angle indicated,
Figure 7 shows a diagram of detection arrangements with coils, and
Figure 8 shows a diagram of the basic structure of the computer and signals to and from the computer.

### DETAILED EMBODIMENT

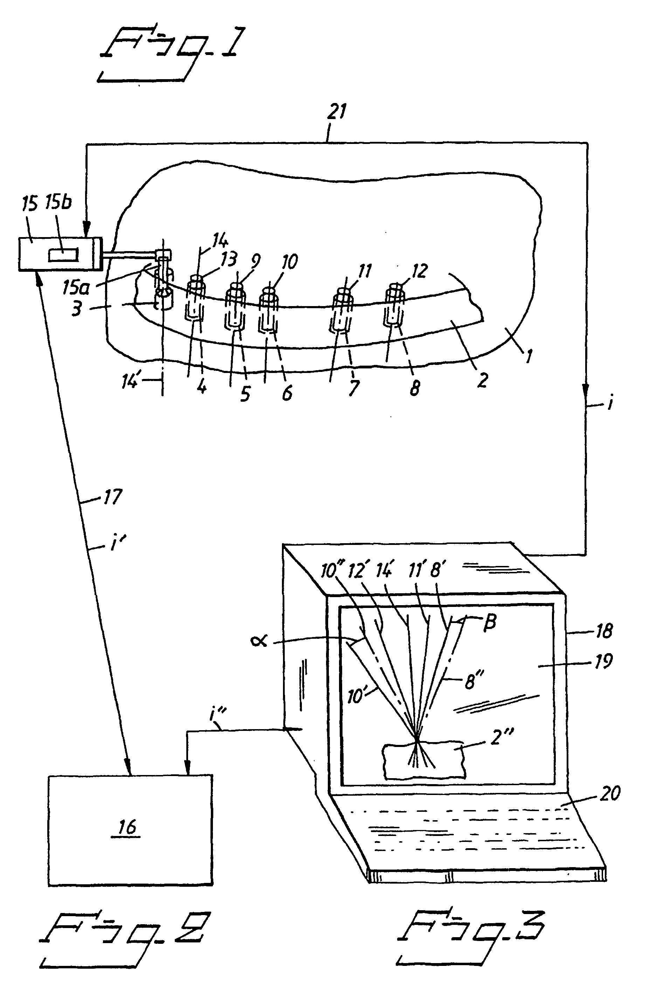

In Figure 1, a mandible is represented diagrammatically by 1. The jaw bone of the mandible is indicated by 2. A surgical intervention is to be performed on the jaw bone by means of a number of drill holes 3, 4, 5, 6, 7, 8 being drilled so as then to accommodate implants 9, 10, 11, 12 and 13. The longitudinal axes of the drill holes and of the implants coincide, and in Figure 1 the longitudinal axis of the hole 4 and of the implant 13 is indicated by 14. The hole 3 is in the process of being produced.

Figure 1 shows the drill holes with implants incorporated. According to the invention, the drill holes 3 - 8 will be drilled so that a predetermined parallelism exists for the longitudinal axes of the drill holes/implants within a permissible range.

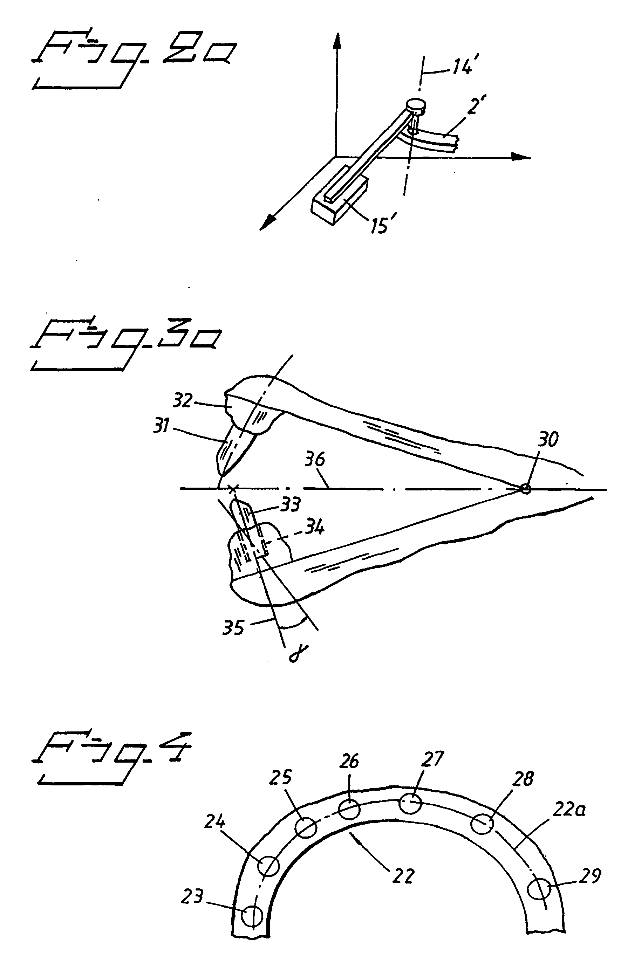

Before each hole is drilled, a hand tool 15 is applied with a part 15a against or on the jaw bone so that the part (the drill) 15a coincides with the anticipated direction of the longitudinal axis 14' of the drill hole/implant. The current spatial position of the hand tool 15 in the actual system of coordinates (in which the patient is located) is read off by or with the detection member 16 according to Figure 2. The detection of the spatial position is symbolized in Figure 2a in which the jaw bone has been indicated by 2' and the direction of the tool 15' has been indicated by 14''. The detection can be effected either by a wireless or wired connection 17, which can be designed in a manner known per se. The connection 17 can be one-way or two-way.

As a function of the position detection by the tool 15, the member 16 generates one or more signals i" which are sent to a computer station 18, which comprises a screen 19 for graphic representation of known type.

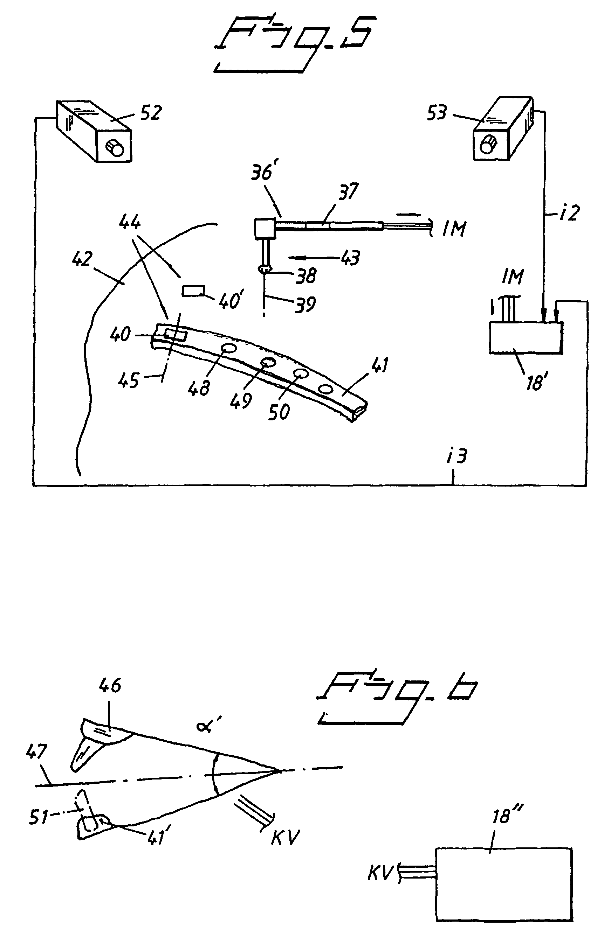

In the illustrative embodiment, the computer station shows an end view 2" of the jaw bone 2 set out in a straight plane, i.e. the dentine 2" extends at right angles to the plane of the figure according to Figure 3.

Figure 3 indicates the longitudinal axes 8', 10', 11', 12', 14', for the drill holes and implants according to Figure 1. In Figure 3, the longitudinal axis 10' slopes at an excess angle α in relation to the ideal extent 10". The inclination at the angle α lies outside the predetermined permissible range, which means that the inclination 10" cannot be permitted in the drilling work which is to be carried out. The longitudinal axis 8" encloses an angle β in relation to the ideal inclination 8". The angle β lies within the permitted range and can be accepted. Inadmissible angles can be compensated by alignment of the tool 15 in the Cartesian plane according to Figure 2a. By changing the spatial position in the said Cartesian plane, the signal content of the signal or signals i is changed, with the result that the said angle α can be compensated so that the mutual inclinations or parallelisms according to Figure 3 lie within anticipated or predetermined permissible values.

The computer station has a terminal 20, via which the ideal positioning of the longitudinal extents of the drill holes/implants can be entered. The actual or simulated longitudinal axes are initiated by the signal content in the signal or signals i. The longitudinal axis 8'' or 10'' can in this case indicate the ideal longitudinal axis while, for example, 8' and 10' indicate longitudinal axes which would occur if the drill hole production were to be carried out in the longitudinal axis direction initiated by the tool 15 according to Figure 1.

The difference between the longitudinal axis direction initiated with the tool 15 and the ideal direction can, in addition to being represented in graph from, also be initiated with the aid of signal transmission from the computer station to the hand tool, via wireless or wired connection 21. The hand tool and/or the computer can be provided with indicating members which operate with sound or light and indicate inadmissible longitudinal axes or inclinations.

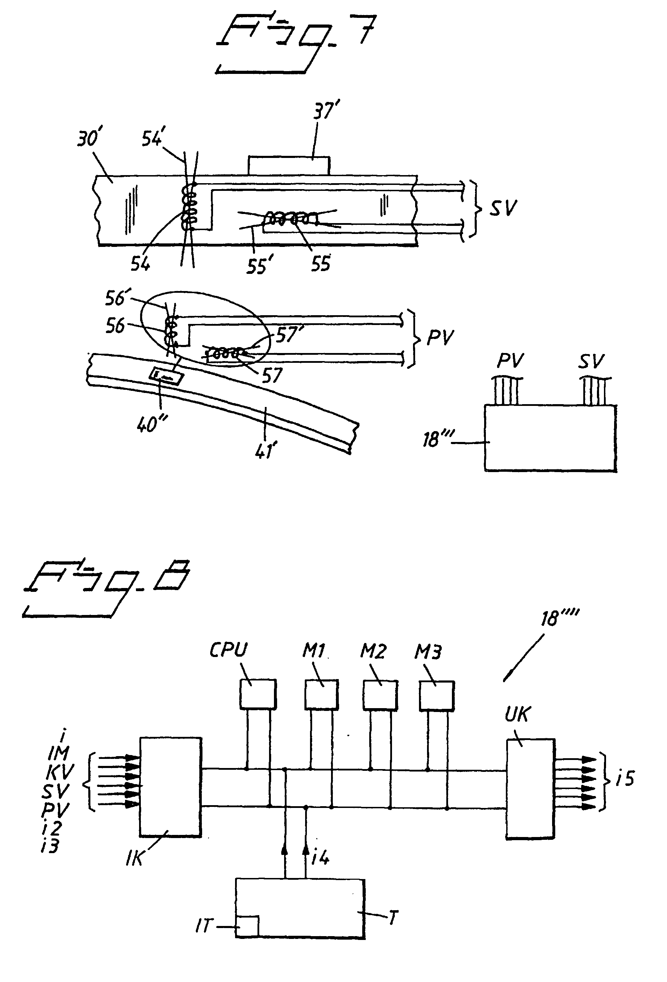

In Figure 4, reference number 22 indicates a jaw bone with an ideal curve 22a for drill holes/implants 23, 24, 25, 26, 27, 28, 29. The simulation of those initiated with the direction 14 is compared with the initial image according to Figure 4 in the computer station according to Figure 3. Inadmissible deviations are adjusted by alignment of the tool 15 to the jaw bone 2.

Figure 3a shows a jaw joint 30. A front tooth is symbolized by 31 and the dentine by 32. The longitudinal axes of the implant 33 and of the drill hole 34 are indicated by 35. An inclination γ for the implant 33 is necessary for correct function in the occlusion plane 36 with the front tooth 31.

In an embodiment according to Figure 5, a position indicator is fixed on the surgical instrument 36' for drilling holes. Because the position of the instrument's indicator 37 in relation to the drill tip 38 and to the longitudinal axis 39 thereof is known, it is possible to use the drill 38 (its tip) as an indicator. A similar indicator 40 can be applied to the jaw bone 41 or to the skull of the patient 42 (where the indicator has been indicated by 40'), and by calculating the difference in position (cf. the arrow 43) and the angle (39) between the tool's indicator (37) and the position 44 and the inclination 45 of the indicator 40 (40') which has been mounted on the patient, the relative position to the patient or the jaw bone is obtained.

With the aid of the drill tip 38, it is thus possible to record the necessary parameters such as, for example, the bite plane 47 (see Figure 6) of the opposite jaw 46 (see Figure 6) and possible settings 48, 49, 50 in which to position the implant. In Figure 6, the imagined implant has been shown by 51 in the actual jaw bone 41'. The jaw angle is shown as α'. After the complete set of information IM has been recorded in the computer, it is compared with defined limit values and is corrected, for example, by means of the hand tool being used once again in the patient. When the positions have been approved, the surgeon is led to the same position as those which have been simulated in the computer station by means of suitable communication means. If appropriate, adjustment information may be input to the computer, so that the simulated values correspond to the ideal values, which adjustment information is fed back.

Examples of known position indicators include light-emitting diodes which have been placed on patient and hand tool, cf. 37, 40, 40'. These are recorded by two video cameras 52, 53 connected to the computer station 18', in which case the position of each light-emitting diode can be calculated (so-called stereophotogrammetry). Another known indicator is electromagnetic and consists of a plurality of coils which emit a field in different directions. In Figure 7, such coils are shown symbolically on the hand tool 30' at 54, 55, and they are attached to the jaw bone 41" at 56, 57. The emitted fields have been indicated by 54', 55' and 56' 57', respectively. These fields are detected by, for example, the detector 40" connected to the patient and by the detector 37' on the hand tool 37'.

An example of an electromagnetic position indicator is the indicator which is manufactured by Ascersion Technology Corp., USA, under the trade name "Flock of birds" or the indicator manufactured by Polhemus Corp., USA, under the trade name "Insidetrak".

The computer station according to the above is shown in Figure 8 by 18"". The computer is of conventional type and comprises a CPU and different types of internal and external memories M1, M2, M3 and terminal T and input circuits IK and output circuits UK. Signals IM, KV, SV and PV are input to the computer station, which can additionally receive information/signals from i2 and i3 (see Figure 5) from the camera equipment. In addition, the signal i4 can be input via the terminal. The last-mentioned signals can provide information on the status of the jaw bone in the maxilla and/or mandible, the tooth spacing, tooth inclinations, implant position, implant inclinations, jaw-joint angles, statistics, type of material, etc. The computer executes actual output signals i5 to the tool, signal equipment, indicators, spatial position signals, ideal or desired inclinations (cf. IM), space between positions etc., of drill holes etc., as well as the said contact points, positions, etc., in the other jaw. These can be executed using software which is known per se. An activation key TI can be arranged on the terminal T, in a foot pedal, or on the hand tool. When the contact TI is activated, the computer is locked in the tested and accepted simulation position, in which the computer can send control signals to the tool when this is being used for actual drill hole production.

The invention is not limited to the embodiment shown above by way of example, and instead can be modified within the scope of the attached patent claims.

## Claims

1. Device for establishing drill holes (3-7) for implants in the jaw-bone (2) where there are predetermined requirements in respect of the mutual parallelism between the longitudinal axes of the drill holes and their inclinations (γ) with respect to an occlusion plane (36), **characterized in that** it comprises a hand tool (15) whose spatial position is monitored and which is designed to generate a simulated longitudinal axis (14) for each desired drill hole (3) in the jaw bone (2) by application against or on the jaw bone (2) at the imagined position of the desired drill hole,
**in that** it comprises a detection member (16) which is arranged to detect the respective actual position of the hand tool and to generate position signals as a function of the detection,
**in that** it comprises a computer station and **in that**, as a function of the said position signals which thus correspond to a longitudinal axis for the desired drill hole, said computer station is arranged to generate a simulation of all or parts of the jaw bone (2'') and of the longitudinal axes of the drill holes, in the said jaw bone, on the basis of the said predetermined requirements in respect of the mutual parallelism and inclinations to the occlusion plane (36), and
**in that**, if the simulated drill hole is acceptable, the station is arranged to send control signals to the tool when this is applied for the actual production of the hole.

2. Device according to claim 1, **characterized in that** the computer station is arranged to reproduce the difference between the simulated and ideal longitudinal axes.

3. Device according to claim 2, **characterized in that** the tool is arranged to permit indication of a bite plane by means of the fact that the tool is able to record points on teeth or on the jawbone in the opposite jaw in the imagined bite position, in which case a point of contact of a centre line through the implant can be assessed with respect to the loading direction upon mastication.

## Patentansprüche

1. Vorrichtung zum Herstellen von Bohrlöchern (3-7) für Implantate in den Kieferknochen (2), mit vorbestimmten Anforderungen bezüglich der gegenseitigen Parallelität zwischen den Längsachsen der Bohrlöcher und ihren Neigungen (γ) mit Bezug auf eine Schließebene (36),
**dadurch gekennzeichnet, dass**
sie aufweist ein Handwerkzeug (15), dessen räumliche Position überwacht wird und das so gestaltet ist, dass es für jedes gewünschte Bohrloch (3) in den Kieferknochen (2) eine simulierte Längsachse (14) durch Anbringen gegen oder auf dem Kieferknochen (2) an der imaginierten Position des gewünschten Bohrloches erzeugt,
dass sie aufweist ein Detektorelement (16), welches so angeordnet ist, das es die jeweilige aktuelle Position des Handwerkzeuges detektiert und Positionssignale als eine Funktion der Detektion erzeugt;
dass sie eine Computerstation aufweist, und dass als eine Funktion der Positionssignale, die somit einer Längsachse für das gewünschte Bohrloch entsprechen, die Computerstation so angeordnet ist, dass sie eine Simulation aller oder von Teilen des Kieferknochens (2") und der Längsachsen der Bohrlöcher in den Kieferknochen, auf der Basis der vorbestimmten Anforderungen bezüglich der gegenseitigen Parallelität und Neigungen zur Schließebene (36) erzeugt, und
dass, wenn das simulierte Bohrloch akzeptabel ist, die Station so angeordnet ist, dass sie Steuersignale zum Werkzeug sendet, wenn dieses für die tatsächliche Erzeugung des Loches angewandt wird.

2. Vorrichtung nach Anspruch 1,
**dadurch gekennzeichnet, dass**
die Computerstation so angeordnet ist, dass sie die Differenz zwischen den simulierten und idealen Längsachsen reproduziert.

3. Vorrichtung nach Anspruch 2,
**dadurch gekennzeichnet, dass**
das Werkzeug so angeordnet ist, dass es die Anzeige einer Bißebene mittels der Tatsache, dass das Werkzeug in der Lage ist, Punkte an Zähnen oder dem Kieferknochen in dem gegenüberliegenden Kiefer in der imaginierten Bißposition aufzuzeichnen, ermöglicht, in welchem Fall ein Kontaktpunkt einer Mittellinie durch das Implantat mit Bezug auf die Laderichtung bei der Mastikation zugänglich ist.

## Revendications

1. Dispositif pour établir des trous de forage (3 à 7) destiné à des implants, dans l'os maxillaire (2), où il y a des exigences prédéterminées concernant le parallélisme mutuel entre les axes longitudinaux des trous de forage et leurs inclinaisons (γ) par rapport à un plan d'occlusion (36), **caractérisé en ce qu'**il comporte un outil à main (15) dont la position spatiale est surveillée, et qui est conçu pour générer un axe longitudinal simulé (14) pour chaque trou de forage souhaité (3) dans l'os maxillaire (2) par application contre l'os maxillaire (2), ou sur celui-ci, au niveau de la position imaginée du trou de forage souhaité,
**en ce qu'**il comporte un élément de détection (16) qui est agencé pour détecter la position réelle respective de l'outil à main, et pour générer des signaux de position en fonction de la détection,
**en ce qu'**il comporte un poste informatique et **en ce que**, en fonction desdits signaux de position qui correspondent donc à un axe longitudinal du trou de forage souhaité, ledit poste informatique est agencé pour générer une simulation de tout l'os maxillaire (2"), ou de parties de celui-ci, et des axes longitudinaux des trous de forage, dans ledit os maxillaire, sur la base desdites exigences prédéterminées concernant le parallélisme mutuel et les inclinaisons par rapport au plan d'occlusion (36), et
**en ce que**, si le trou de forage simulé est acceptable, le poste est agencé pour émettre des signaux de commande vers l'outil lorsqu'il est mis en oeuvre pour la production réelle du trou.

2. Dispositif selon la revendication 1, **caractérisé en ce que** le poste informatique est agencé pour reproduire la différence entre les axes longitudinaux simulés et idéaux.

3. Dispositif selon la revendication 2, **caractérisé en ce que** l'outil est agencé pour permettre une indication d'un plan de morsure par l'intermédiaire du fait que l'outil peut enregistrer des points sur les dents ou sur l'os maxillaire dans la mâchoire opposée dans la position de morsure imaginée, cas dans lequel on peut établir un point de contact d'une ligne centrale à travers l'implant par rapport à la direction de charge lors d'une mastication.
